(19)

Europäisches
Patentamt

European
Patent Office

Office européen
des brevets

(11) **EP 4 471 649 A1**

(12) **EUROPEAN PATENT APPLICATION**

(43) Date of publication:
**04.12.2024   Bulletin 2024/49**

(21) Application number: **23305870.0**

(22) Date of filing: **01.06.2023**

(51) International Patent Classification (IPC):
***G06F 30/17*** *(2020.01)*          *G06F 111/04* *(2020.01)*
*G06F 119/18* *(2020.01)*

(52) Cooperative Patent Classification (CPC):
**G06F 30/17;** G06F 2111/04; G06F 2119/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dassault Systèmes**
**78140 Vélizy-Villacoublay (FR)**

(72) Inventor: **SCHMIDT, Martin-Pierre**
**Vélizy-Villacoublay (FR)**

(74) Representative: **Bandpay & Greuter**
**11 rue Christophe Colomb**
**75008 Paris (FR)**

(54) **DESIGNING A MANUFACTURING PRODUCT HAVING ONE OR MORE MECHANICAL FUNCTIONALITIES**

(57)    The disclosure notably relates to a computer-implemented method for designing a manufacturing product having one or more mechanical functionalities. The method comprises obtaining a first instance of a CAD model and a mesh representing a target boundary shape of the manufacturing product, and determining a second instance of the CAD model. The CAD model includes a feature tree having a plurality of continuous CAD parameters, and a set of one or more parameterization constraints which specifies the one or more mechanical functionalities. The first instance includes a first value and the second instance includes a second value for each continuous CAD parameter, respectively. The determining of the second instance consists of computing the second values by modifying at least part of the first values to minimize a shape dissimilarity metric (ERR) between a boundary shape represented by the first instance of the CAD model and the target boundary shape.

## Description

### TECHNICAL FIELD

The disclosure relates to the field of computer programs and systems, and more specifically to a method, system, and program for designing a manufacturing product having one or more mechanical functionalities.

### BACKGROUND

A number of systems and programs are offered on the market for the design, the engineering, and the manufacturing of objects. CAD is an acronym for Computer-Aided Design, e.g. it relates to software solutions for designing an object. CAE is an acronym for Computer-Aided Engineering, e.g., it relates to software solutions for simulating the physical behavior of a future product. CAM is an acronym for Computer-Aided Manufacturing, e.g., it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production, and service.

Some solutions and products for designing a manufacturing product have been provided. Such solutions provide the design output as a parametric CAD model or a discrete representation. However, such solutions do not allow an efficient design of a CAD model based on a shape only available in a discrete representation format.

Within this context, there is still a need for an improved computer-implemented method for designing a manufacturing product having one or more mechanical functionalities.

### SUMMARY

It is therefore provided a computer-implemented method for designing a manufacturing product having one or more mechanical functionalities. The method comprises obtaining a first instance of a CAD model, and a mesh representing a target boundary shape of the manufacturing product. The CAD model includes a feature tree having a plurality of continuous CAD parameters. The CAD model further includes a set of one or more parameterization constraints which specifies the one or more mechanical functionalities. The first instance includes a first value for each continuous CAD parameter. The method further comprises determining a second instance of the CAD model from the first instance of the CAD model. The second instance includes a second value for each continuous CAD parameter. The determining of the second instance consists of computing the second values by modifying at least part of the first values, so as to minimize a shape dissimilarity metric (ERR) between a boundary shape represented by the first instance of the CAD model and the target boundary shape.

The method may comprise one or more of the following:

- the shape dissimilarity metric is a discrepancy measure between a first scalar field and a second scalar field, the first scalar field being defined based on the CAD model and the second scalar field being defined based on the mesh;
- the first scalar field is defined on a first shape englobing the first instance of the CAD model, and the second scalar field is defined on a second shape englobing the target boundary shape; wherein optionally, each of the first shape and the second shape is a respective bounding box;
- the first scalar field is the application of a first function on a respective signed distance field to the first instance of the CAD model, and the second scalar field is the application of a second function on a respective signed distance field to the mesh; wherein optionally, the first function and the second function are identical;
- each of the first scalar field and the second scalar field is a density field, wherein optionally at least one of the first function and the second function is a smooth Heaviside function or an approximation of a smooth Heaviside function;
- the discrepancy measure between a first scalar field and a second scalar field is a measure of squared differences between the first scalar field and the second scalar field; wherein, optionally, the measure of squared difference comprises: a sum of squared differences, a smooth minimum of squared differences, or a smooth maximum of squared differences;

- the minimization uses a gradient-based optimization method, the optimization method having as free variables the plurality of continuous CAD parameters, the shape dissimilarity metric being a differentiable function with respect to the free variables;
- the optimization method uses sensitivities, each sensitivity being an approximation of a respective derivative of a respective shape dissimilarity metric with respect to a respective CAD parameter of the plurality of continuous CAD parameters;
- the sensitivities are compositions of: respective derivatives of the shape dissimilarity metric with respect to the signed distance field, and respective derivatives of the signed distance field with respect to a respective CAD parameter of the plurality of continuous CAD parameters;
- each of the respective derivatives of the shape dissimilarity metric with respect to the signed distance field comprises an analytical derivative;
- each of the respective derivatives of the signed distance field with respect to a respective CAD parameter comprises an approximative derivative; the approximative derivative optionally comprising a finite difference; and/or
- the CAD model further includes manufacturing specifications each associated to a respective portion of the feature tree, the first instance and the second instance both being configured for being inputted to a manufacturing tool and be manufactured according to the manufacturing specifications.

It is further provided a computer program comprising instructions for performing the method.

It is further provided a computer readable storage medium having recorded thereon the computer program.

It is further provided a system comprising a processor coupled to a memory, the memory having recorded thereon the computer program.

## BRIEF DESCRIPTION OF THE DRAWINGS

Non-limiting examples will now be described in reference to the accompanying drawings, where:

- FIG. 1 shows an example of a graphical user interface of the system;
- FIG. 2 shows an example of the system;
- FIG.s 3-4 show examples of parametric CAD models;
- FIG. 5 shows examples of polygon meshes;
- FIG. 6 shows a graphical representation of an example application of the method;
- FIG. 7 shows a flowchart of an example of the method;
- FIG.s 8-14 show steps of an example of the method;
- FIG.s 15A-B show a summary of a mathematical formulation of the method;
- FIG.s 16-18 show an example application of the method on a 3D connecting rod; and
- FIG.s 19-22 show an example application of the method on a 2D shape imprint.

## DETAILED DESCRIPTION

It is proposed a computer-implemented method for designing a manufacturing product (i.e., also known as product to be manufactured, manufacturable product, or product of manufacture) having one or more mechanical functionalities. The method comprises obtaining a first instance of a CAD model and a mesh. The CAD model includes a feature tree. The feature tree has a plurality of continuous CAD parameters. The CAD model further includes a set of one or more parametrization constraints. The set of one or more parametrization constraints specifies the one or more mechanical functionalities. The first instance (of the CAD model) includes a first value for each continuous CAD parameter. The obtained mesh represents a target boundary shape of the manufacturing product. By the target boundary shape, it is meant a boundary shape which is at least a target for the manufacturing product. The method further comprises determining a second instance of the CAD model from the first (obtained) instance of the CAD model. The second instance includes a second value for each continuous CAD parameter. The (step of) determining the second instance consists of computing the second values by modifying at least part of the first values, so as to minimize a shape dissimilarity metric between a boundary shape represented by the CAD model and the target boundary shape.

Such a method constitutes an improved solution for designing a manufacturing product, by forming an efficient, generic, and automatic approach to optimize a CAD model in order to fit a provided mesh. This means that, being provided with, on the one hand, a first instance of a CAD model which can be used as a template for a parameterized CAD model and, on the other hand, a mesh, the method is able to find respective optimal parameters for modifying the template so as to obtain a shape as similar as possible to the provided mesh. Hence, the method determines a second instance of the template which includes the optimized values for the continuous CAD parameters of the template. The obtention of a shape similar to the provided mesh is achieved by minimizing a shape dissimilarity metric between a boundary shape represented by the CAD model and the target boundary shape. Thereby, the method is able to fit a provided mesh into a parameterized (i.e., parametric) CAD model with an optimally similar boundary shape. The method does not impose any restriction on the type of CAD operations in the CAD model. This provides a general application of the method to design various manufacturing products.

Notably, such a method aids designers and engineers in the process of designing. It is very common in engineering fields to perform a design process based on a provided mesh (e.g., a polygonal mesh) without having access to a respective CAD file of said provided mesh. Such a mesh may be retrieved from an in-house database or downloaded from an online library. Alternatively or additionally, such a mesh may be obtained from a topology optimization method. As known, topology optimization methods may provide a (e.g., voxel) mesh of a final design based on values of a material density function. Further alternatively or additionally, such a mesh which is stored in a database, may be a mesh generated/outputted by a software package which is no longer available to the designer. Yet further alternatively or additionally, such a mesh which is stored in a database, may be a mesh generated/outputted as an output by a scanning process.

In examples, the method may obtain the mesh via a 3D scanning process. In other words, the method may comprise, prior to obtaining the mesh, a scanning process on a real-world sample of a mechanical product. The scanning process may output a point cloud or a mesh representing said mechanical part. The method may convert a point cloud to a mesh. In such examples, the method may in particular serve to obtain a CAD model of a physical object via a scanning process. The method may obtain such a CAD model by morphing a template of a CAD model to the output of the scanning. Such applications are particularly relevant to reverse engineering using a sample of a physical object while having no access to fabrication details of said object. For examples, the method may be used to fabricate a mockup of an already existing manufacturing product.

In examples of the method, the provided CAD model (or equivalently the first instance thereof) may include manufacturing specifications or instructions. Such specifications may comprise a set of high-level specifications of a manufacturing procedure of the CAD model (e.g., specifications regarding finishing a surface, admissible tolerances, and/or a preferred fabrication method). Each of such specifications may be associated to a respective portion of the feature tree. The respective portion of the feature tree comprises one or more CAD feature such that a result CAD feature of the portion is in association with a specification. In other words, each of the specifications may be related to one or more characteristics of the CAD model represented by a union result of a respective portion of the feature tree. Such manufacturing specifications are related to any instance of the CAD model. In other words, both of the first instance and the second instance are configured for being inputted to a manufacturing tool and be (e.g., directly and without further intervention of a user) manufactured according to the manufacturing specifications. The object resulting from the manufacturing has a physical shape corresponding to the represented geometry by the input (i.e., provided) mesh. Such manufacturing processes are discussed below.

"Designing a manufacturing product" designates any action or series of actions which is at least a part of a process of elaborating a modeled object (3D or 2D) of the manufacturing product. The manufacturing product may be in particular a mechanical part. The method may form such a process or may form at least a part of the process. In examples, the process of elaborating may comprise morphing a first design (e.g., according to a provided/obtained mesh) to a template of a manufacturing product/mechanical part. In such a morphing, a template of parameterized CAD model may be automatically instantiated to replicate a shape or follow a given mating surface, while preserving its clean and exact CAD construction.

The method thus generally manipulates modeled objects, such as the finite 3D mesh/2D mesh, or CAD model designed/outputted by the method. A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system. The concepts of CAD and CAM systems are discussed in detail later below.

By "a manufacturing product having one or more mechanical functionalities" it is meant that the manufacturing product may serve one or more particular functions. Such functions may be realized in cooperation with other parts/products or independently. Such functions may comprise mating functionality, i.e., a functionality achievable in contact with another part of an assembly. For example, the manufacturing product may have one or more surfaces defined as support surfaces and are set to be parallel to each other, optionally fixed at a constant distance. In another example, the manufacturing product may be set to have a through hole around a fixed axis, optionally at a fixed diameter. In another examples, the manufacturing product may be subject to one or more mating constraints. The mechanical functionalities may be defined by one or more functional portions of the manufacturing product. By a functional portion it is meant a portion whose geometry and/or topology is responsible for a function (i.e., functionality) of the product. In examples, the manufacturing product may be a shaft and a functional portion of the shaft may be its locally cylindrical outer surface. In other words, while a local diameter of the shaft at each location or the length of the shaft may change, any instantiation of a general shaft template has such a local cylindrical shape. In particular, such a cylindrical shape is directly related to the function of a shaft in energy transmission. Other examples of such functional portions of a template CAD model may be a groove for a key (while having different form/length/depth), or a gear (while having different teeth height, gear angle or different diameters/width). The manufacturing product may possibly have other mechanical functionalities. Such other mechanical functionalities are not specified by the one or more parametrization constraints of the obtained CAD model. Such mechanical functionalities are maybe but not be necessarily maintained in the second instance of the CAD model.

As discussed above, the method comprises obtaining a first instance of a CAD model and a mesh. By "obtaining" it is meant providing to the method. The method may obtain each of the first instance of a CAD model and/or the mesh from a local or an online database, optionally upon an action by a user/designer. As known a CAD model is a parametric model. In other words, a CAD model is defined using a set of parameters. By an "instance" of a (parametric) CAD model it is meant an instantiation (i.e., realization) of said CAD model upon an attribution of respective values to said set of parameters defining the CAD model. In examples, the set of parameters may include one or more positional parameters (e.g., coordinate of one or more points of the CAD model) and/or one or more dimensional parameters (e.g., an angle between two surfaces, and/or a length or an area). As further known, a (parametric) CAD includes a feature tree. Said feature tree may be at least partially defined by the set of parameters. The feature tree of the CAD model has a plurality of continuous CAD parameters. Such continuous parameters are a subset of the set of parameters of the CAD model as discussed above. By a "continuous CAD parameter" it is meant a CAD parameter which can vary in a respective range continuously. For example, a length of a rod (e.g., defined upon an extrusion operator in the feature tree) can be allowed to vary continuously between a minimum length and a maximum length. In examples, the plurality of continuous CAD parameters may comprise a plurality of coordinates of one or more points of the CAD model, for example on the boundary of the CAD model. Said CAD model may be 2D or 3D. In examples wherein the CAD model is a 3D CAD model, the plurality of continuous CAD parameters may comprise one or more parameters related to a plurality of 2D surfaces which may form a boundary of the CAD model. In examples wherein the CAD model is a 2D model, the plurality of continuous CAD parameters may comprise one or more parameters related to a plurality of (1D) segments. The plurality of segments may be the segments defining a boundary of the CAD model. The continuous CAD parameters may further include one or more parameters related to a plurality of control points, and/or one or more parameters related to a plurality of splines.

In examples, the feature tree of the CAD model may further include a set of non-continuous parameters. Such non-continuous parameters remain constant at every instantiation of the CAD model and thereby are not free variables of the optimization of the shape dissimilarity performed for determining the second instance of the CAD model. In other words, such non-continuous parameters belong to the fixed parameters of said optimization. For example, the method may determine an optimal value for a radius of a fillet feature, a depth of a pocket feature, or an angle of a thread. However, the method may not vary a binary or strongly discontinuous parameter like the presence/absence of a feature or a part (e.g., a mirror or a wheel of a car) during the optimization.

In addition to the plurality of continuous CAD parameters, the CAD model further includes a set of one or more parameterization constraints. Said set may determine one or more individual parameters of one or more respective features of the feature tree, and/or one or more mutual relationship between one or more respective features. Said set may comprise one or more limits (i.e., upper/lower boundaries) on respective ranges of one or more of the continuous CAD parameters. For example, any of said ranges may define an admissible range of values for an extrusion length along an extrusion axis or an admissible range of value for a revolution angle along a revolution axis. For another example, any of said ranges may define a presence of a hole (e.g., a through hole) in the manufacturing part by setting a non-zero minimum for the hole diameter. Such a hole may in particular be assigned to a mechanical functionality of accepting a shaft, a fixture, a bearing, or a screw. Alternatively, or additionally, said set may comprise one or more CAD operators defining (each instance of) the CAD model. The one or more CAD operators may be for example one or more of a fillet, an extrusion, a cut, and a revolution. Alternatively, or additionally, said set may comprise one or more geometrical constraints. The geometrical constraints may establish a constraint between two parameters of the CAD model. In examples, a constraint may define a length ratio between two lengths of (each instance) the CAD model. In other examples, a constraint may define a mating relationship between two surfaces of the CAD model (e.g., a parallel/perpendicular relationship between two faces). In yet other examples, a constraint may define one or more CAD operator characteristics, for example, a constraint may define a hole in the (template) CAD model as a through-hole. Thereby, at each instance (i.e., upon each instantiation) with possibly different geometrical size, said hole remains as a through-hole. The method may apply said limits in modifying at least part of the first values of the CAD model, so as to minimize the shape dissimilarity metric. In other words, the method may apply said limits as constraints in said minimization.

Said set of one or more constraints specifies the one or more mechanical functionalities of the manufacturing product which is represented by any instance of the CAD model. In other words, as each instance of the obtained CAD model includes said set of one or more parameterization constraints which specifies the one or more mechanical functionalities, both of the first instance and the second instance have said specified functional functionalities. As discussed above, the CAD model may have other mechanical functionalities which are not maintained in the designing process of the method. Such mechanical functionalities may be specified by other sets of one or more parameterization constraints which are not included in the obtained first instance of the CAD model or not taken into account in the designing process.

As discussed above, the first instance includes a first value for each continuous CAD parameter. In other words, attributing, to a (template) CAD model, a first value for each of its continuous CAD parameters forms a first instance of the CAD model. Such an instance inherits the mechanical functionalities of the (template) CAD model by including the set of parameterization constraints.

By the "mesh" obtained by the method it is meant a mesh representing at least a target boundary shape of the manufacturing product. The mesh may be 2D or a 3D mesh which represents the manufacturing product. Examples of 2D and 3D meshes are discussed below in relation to discrete geometrical representations. Said boundary shape is a shape which defines at least part of the boundary of the manufacturing product. When the obtained mesh is a 3D mesh, said boundary shape may be a 3D surface of the manufacturing product. The obtained 3D mesh may be a polygonal surface mesh. When the obtained mesh is a 2D mesh, said boundary shape may be a plurality of segments or polylines. By the "target" boundary shape it is meant a part of boundary shape of the manufacturing product which is to be designed according to the method.

The method then determines a second instance of the CAD model from the first instance of the CAD model. Similarly to the first instance of the CAD model, the second instance includes a value for each CAD parameter, but second value (the set of second values being different from the set of first values). The determining of the second instance of the CAD model consists of computing the second values by modifying at least part of the first values. In other words, the method determines the second instance by keeping constant all other parameters of the first instance and modifies a part of the first values. The method modifies said first values so as to minimize a shape dissimilarity metric between a boundary shape represented by the first instance of the CAD model and the target boundary shape. The method thereby solves an optimization (i.e., a minimization) problem with an objective function which is said shape dissimilarity metric between a boundary shape represented by the first instance of the CAD model and the target boundary shape.

In examples, the shape dissimilarity metric may be a discrepancy measure between a first scalar field and a second scalar field. In such examples, the first scalar field may be defined based on the (obtained) CAD model and the second scalar field may be defined based on the (obtained) mesh. This constitutes an improved solution to compare two models which are not in a same format (i.e., one is a mesh while the other one is a parametric CAD model) by establishing a scalarfield using each of them. Applying a discrepancy measure between two scalar fields (which only comprise two spatial distributions of values) is significantly more efficient than comparing two 3D modeled objects. Each of the first scalar field and the second scalar field may be realized (i.e., evaluated) at a respective gridding. Such a gridding may be but not necessarily the same for the first and the second scalar fields. Alternatively, each of the first scalar field and the second scalar field may be realized (i.e., evaluated) at a respective sub-division respective to (e.g., representing) the obtained first instance of the CAD model and the obtained mesh, respectively. In such examples, the first and/or the second scalar filed(s) may be realized at a plurality of points. Each point of said plurality may be respective to an element of said sub-division. For example, the sub-division may be an unstructured tetrahedron sub-division and said respective point may be a barycentre of each tetrahedron. Such a sub-division may be but not necessarily the same for the first and the second scalar fields.

In examples, the discrepancy measure between a first scalar field and a second scalar field may comprise a point-wise discrepancy measure over at least a first region of the first scalar field and a second region of the second scalar field. Said first region and said second region may be respective to the manufacturing product. As discussed above, the respective gridding/sub-division of the first and the second scalar field are not necessarily the same. In such examples, when a respective value in the first region and the second region are not known at a same point, the method may compute said respective value using interpolation as known in the art. For example, the method may use a linear interpolation, a bilinear interpolation for 2D cases, and/or trilinear interpolation for 3D cases.

The first scalar field may be defined on a first shape. The first shape englobes (a respective shape represented by) the first instance of the CAD model. On the other hand, the second scalar field may be defined on a second shape englobing (a respective shape represented by) the target boundary shape represented by the obtained mesh. By "defining a scalar field on a shape" it is meant that said scalar field has a value on each point inside or on the boundary of said shape. Each of the first shape and the second shape may be a respective bounding box.

In examples, the first scalar field may be (the result of) an application of a first function on a respective signed distance field to the first instance of the CAD model. The second scalar field may be (the result of) an application of a second function on a respective signed distance field to the mesh. In examples, the first function and the second function may be identical, i.e., a same function. By a "signed distance field (SDF)" it is meant a field defined based on a signed distance function (see https://en.wikipedia.org/wiki/Signed_distance_function). By an SDF to a CAD model (or more precisely an instance thereof) it is meant an SDF computed with respect to the boundary of said CAD model. Similarly, by an SDF to a mesh it is meant an SDF computed with respect to the boundary represented by said mesh. The signed distance field to a CAD model or a mesh may take negative values inside respective boundary of the CAD model, or the mesh and positive values outside said respective boundary. The value of the SDF on said respective boundary (of said CAD model or said mesh) may be zero. Each of the first SDF and the second SDF may be realized (i.e., evaluated) at a respective gridding or a sub-division as discussed above the first/second scalar field. Such a gridding/sub-division for each SDF may be the same as the respective one for the scalar field. In examples where an SDF is evaluated on a different gridding/sub-division than its respective scalar field, the method may employ an interpolation (e.g., linear, bilinear, trilinear) to obtain a value of said respective scalar field as discussed above.

Each of the first scalar field and the second scalar field may be a density field. By a "density field" it is meant a scalar field which its values are in the range of [0,1]. This improves the performance of such examples as the function appearing in the minimization problem has a bounded and known range. Optionally at least one of the first function (in examples where the first scalar field is a density field) and the second function (in examples where the second scalar field is a density field) is a smooth Heaviside function or an approximation of a smooth Heaviside function. Such a smooth Heaviside functions or an approximation thereof may be any known function in the field (see https://en.wikipedia.org/wiki/Heaviside step function, Section Analytic approximations). Using Heaviside function filters unnecessarily numerous values for the functions appears in the minimization problem thereby improving the minimization computational efficiency. However, as a Heaviside function is a discontinuous function, such examples exploit a smoother version of the Heaviside function to retain the continuity of the objective function thereby improving the solution procedure of the minimization problem, for example using any well-known gradient-based optimization method.

In examples, the discrepancy measure between a first scalar field and a second scalar field may be a measure of squared differences between the first scalar field and the second scalar field. The discrepancy measure may be in particular a differentiable function of with respect to its arguments. Optionally, the measure of squared difference may comprise a sum of squared differences, a smooth minimum of squared differences, or a smooth maximum of squared differences. The method may use for example any known smooth maximum/minimum (see https://en.wikipedia.org/wiki/Smooth maximum). Using some smooth measures provides a well-defined and smooth objective function for the minimization problem which improve the computation efficiency.

In examples, the minimization may use a gradient-based optimization method. In such examples, the optimization method may have as free variables the plurality of CAD parameters. In such examples, the shape dissimilarity metric is a differentiable function with respect to the free variables. Being differentiable improves the efficiency in solving the optimization problem.

In examples, the optimization method may use sensitivities. Each sensitivity is defined as an approximation of a respective derivative of a respective shape dissimilarity metric with respect to a respective CAD parameter of the plurality of CAD parameters. The method may compute said sensitivities as an integrated step in the optimization method. For example, the optimization method may comprise a plurality of iterations and compute said sensitivities at each iteration. For general problems it may be significantly difficult and/or computationally costly to compute analytical derivatives of the objective function. Therefore, using the sensitivities as an approximation of a derivative provides a computationally efficient approach for the optimization. It has been found (as also presented in the numerical results below) that despite using an iterative method with zero-order optimization schemes with an approximation of the derivative of the objective function, the method manages/succeeds to iteratively and smoothly modify the design from an initial state of the first instance to a converged state of the second instance.

The sensitivities discussed above may be compositions of respective derivatives of the shape dissimilarity metric with respect to the signed distance field, and respective derivatives of the signed distance field with respect to a respective CAD parameter of the plurality of CAD parameters.

Each of the respective derivatives of the shape dissimilarity metric with respect to the signed distance field may comprise an analytical derivative. On the other hand, each of the respective derivatives of the signed distance field with respect to a respective CAD parameter may comprise an approximative derivative. In such examples, the approximative derivative may comprise a finite difference. The method may compute a finite difference using a perturbation size as known in the field. Such a perturbation may comprise slightly perturbing any or each of the continuous CAD parameters and obtain the result perturbation in the SDF. The values of the perturbation size may be provided by a user or be predefined.

The method may thereby use a separation of the derivative computation into numerical and analytical part. Such a separation is advantageous because numerical approximation of a derivative (e.g., using a finite difference scheme) can be less reliable for highly non-linear functions. On the other hand, analytical derivation is perfectly tractable for the shape dissimilarity metric and yields the exact solution for negligible computational cost.

As discussed above, the system may be any combination of a CAD system, a CAE system, a CAM system, a PDM system and/or a PLM system. By CAD solution (e.g., a CAD system or a CAD software), it is additionally meant any system, software, or hardware, adapted at least for designing a modeled object on the basis of a graphical representation of the modeled object and/or on a structured representation thereof (e.g., a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g., non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g., representing a product such as a part or an assembly of parts, or possibly an assembly of products. The 2D or 3D modeled object may be a manufacturing product, i.e., a product to be manufactured. By "3D modeled object", it is meant any object which is modeled by data allowing its 3D representation. A 3D representation allows the viewing of the part from all angles. For example, a 3D modeled object, when 3D represented, may be handled, and turned around any of its axes, or around any axis in the screen on which the representation is displayed. This notably excludes 2D icons, which are not 3D modeled. The display of a 3D representation facilitates design (i.e., increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

The obtained mesh taken as input by the method may be a 2D/3D discrete geometrical representation of a manufacturing product. The discrete geometrical representation is a data structure which comprises a discrete set of pieces of data. Each piece of data may specify an element of the product/mechanical part, and be referred to as a discrete element. The discrete geometrical representation may be 3D or alternatively 2D. Yet alternatively, the discrete geometrical representation may be both 3D and 2D, *i.e.* may comprise a 3D portion which is a 3D discrete geometrical representation and a 2D portion which is a discrete geometrical representation, such as a hybrid 3D-2D meshing (e.g. for modeling a product comprising both thin parts, modeled with the 2D portions, and thick parts, modeled with the 3D portions). The discrete geometrical representation may in examples comprise a number of such pieces of data higher than 100, 1000, or 10000.

In case of a 3D discrete geometrical representation, the 3D discrete geometrical may be a skin 3D discrete geometrical representation, representing a skin of the manufacturing product, such as a 3D surface mesh (e.g. a triangular surface mesh) or a tessellation. In such a case, each piece of data may represent a respective geometrical entity positioned in a 3D space, such that the pieces of data form a representation of the mechanical product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). The aggregation (i.e., union or juxtaposition) of the geometrical entities represents altogether at least part of the outer surface of the object.

The modeled object outputted/designed by the method may be a CAD model, for example comprising or consisting in a feature tree. Such a model may stem from a CAE model and may results from a CAE to CAD conversion process, that the method may for example comprise at an initial stage.

The CAD model may be feature-based (*e.g.* it may comprise a feature tree, and optionally a corresponding B-rep obtained by executing the feature tree). A feature-based 3D model allows (*e.g.* during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (*e.g.* during the determination of a manufacturing file or CAM file as discussed hereinafter) an automatic creation of a toolpath for a machine via a computer numerical control (CNC). With CNC, each object to be manufactured gets a custom computer program, stored in, and executed by the machine control unit, a microcomputer attached to the machine. The program contains the instructions and parameters the machine tool will follow. Mills, lathes, routers, grinders, and lasers are examples of common machine tools whose operations can be automated with CNC.

A key characteristic of a CAD model is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context. The method constitutes a solution to facilitate the obtention of a CAD model which is easier to work with during a design process thanks to its high-level parametrization.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduces memory requirements for the underlying systems, as compared for example to CAE models, in addition to facilitate editability of the model. This amounts to say that a CAE to CAD conversion process in fact compresses the CAE model into a CAD model which is lighter in terms of memory requirements (*e.g.* footprint), in addition to transforming the CAE model into a more easily editable CAD model.

The generation of a custom computer program from CAD files may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed, and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic, or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method may be included in a production process, which may comprise, after performing the method, producing a physical product corresponding to the modeled object designed by the method. The production process may comprise the following steps:

- (*e.g.* automatically) applying the method, thereby obtaining the CAD model outputted by the method; and
- using the obtained CAD model for manufacturing the product.

Using a CAD model for manufacturing designates any real-world action or series of action that is/are involved in/participate to the manufacturing of the product represented by the CAD model. Using the CAD model for manufacturing may for example comprise the following steps:

- editing the obtained CAD model;
- performing simulation(s) based on the CAD model or on a corresponding CAE model (*e.g.*, a CAE obtains model from the CAD model after a CAE to CAD conversion process), such as simulations for validation of mechanical, use and/or manufacturing properties and/or constraints (*e.g.* structural simulations, thermodynamics simulation, aerodynamic simulations);
- editing the CAD model based on the results of the simulation(s);
- optionally (*i.e.* depending on the manufacturing process used, the production of the mechanical product may or may not comprise this step), (*e.g.* automatically) determining a manufacturing file/CAM file based on the (*e.g.* edited) CAD model, for production/manufacturing of the manufacturing product;
- sending the CAD file and/or the manufacturing file/CAM file to a factory; and/or
- (*e.g.* automatically) manufacturing, based on the determined manufacturing file/CAM file or on the CAD model, the mechanical product originally represented by the model outputted by the method. This may include feeding (*e.g.* automatically) the manufacturing file/CAM file and/or the CAD file to the machine(s) performing the manufacturing process.

This last step of manufacturing may be referred to as the manufacturing step or production step. This step manufactures/fabricates the part/product based on the CAD model and/or the CAM file, e.g. upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user (*i.e.* a designer), performing one or more editions of the CAD model, e.g. by using a CAD solution. The modifications of the CAD model may include one or more modifications each of a geometry and/or of a parameter of the CAD model. The modifications may include any modification or series of modifications performed on a feature tree of the model (*e.g.* modification of feature parameters and/or specifications) and/or modifications performed on a displayed representation of the CAD model (*e.g.* a B-rep). The modifications are modifications which maintain the technical functionalities (e.g., said mechanical functionalities) of the part/product, i.e. the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The method may comprise performing the manufacturing step upon an obtention of (i.e., providing) the mesh and the first instance of the CAD model. In examples, upon a trigger by the user to activate respective functionality of a CAD software the method embedded therein, said software may launch the method to obtain an automatic morphing of the mesh to a second instance of the CAD model. Upon possible further triggers by the user, the software may launch the manufacturing step as discussed, for example via a direct conversion of the second instance of the CAD model to CAM and then proceeding to manufacturing.

The CAM file may comprise a manufacturing step up model obtained from the CAD model. The manufacturing step up may comprise all data required for manufacturing the mechanical product so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (*e.g.* automatically) determining a production file from the CAD model (*e.g.* any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://mv.3dexperience.3ds.com/welcome/fr/compass-world/rootroles/nc-mill-turn-machine-programmer, and/or
- The Powder Bed Machine Programmer of Dassault Systèmes illustrated on https://my.3dexperience.3ds.com/welcome/fr/compass-world/rootroles/powder-bed-machine-programmer.

The product/part may be an additive manufacturable part, *i.e.* a part to be manufactured by additive manufacturing (*i.e.* 3D printing). In this case, the production process does not comprise the step of determining the CAM file and directly proceeds to the producing/manufacturing step, by directly (*e.g.* and automatically) feeding a 3D printer with the CAD model. 3D printers are configured for, upon being fed with a CAD model representing a mechanical product (*e.g.* and upon launching, by a 3D printer operator, the 3D printing), directly and automatically 3D print the mechanical product in accordance with the CAD model. In other words, the 3D printer receives the CAD model, which is (*e.g.* automatically) fed to it, reads (*e.g.* automatically) the CAD model, and prints (*e.g.* automatically) the part by adding together material, *e.g.* layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e.g.* automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part *(i.e.* a part manufactured by machining), such as a milled part *(i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise *(e.g.* automatically) checking if the CAD model has any geometric particularity *(e.g.* error or artefact) that may affect the production process and *(e.g.* automatically) correcting such particularities. For example, machining or milling based on the CAD model may not be carried out if the CAD model still comprises sharp edges (because the machining or milling tool cannot create sharp edges), and in such a case the determination of the CAM file may comprise *(e.g.* automatically) rounding or filleting such sharp edges *(e.g.* with a round or fillet radius that corresponds, e.g. substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections *(e.g.* rounding or filleting of geometries) may be carried out automatically as previously discussed, but also, by a user *(e.g.* a machining engineer), which performs the correction by hand on a CAD and/or CAM solution, *e.g.* the solution constraining the user to perform corrections that make the CAD model compliant with specifications of the tool used in the machining process.

Further to the check, the determination of the CAM file may comprise *(e.g.* automatically) determining the machining or milling path, *i.e.* the path to be taken by the machining tool to machine the product. The path may comprise a set of coordinates and/or a parameterized trajectory to be followed by the machining tool for machining, and determining the path may comprise *(e.g.* automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e.g.* that the tool continuously follows without breaking contact with the material to be cut. Alternatively, the path may be a concatenation of a sequence sub-paths to be followed in a certain order by the tool, *e.g.* each being continuously followed by the tool without breaking contact with the material to be cut. Optionally, the determination of the CAM file may then comprise *(e.g.* automatically) setting machine parameters, including cutting speed, cut/pierce height, and/or mold opening stroke, for example based on the determined path and on the specification of the machine. Optionally, the determination of the CAM file may then comprise (e.g. automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then *(e.g.* directly and automatically) fed to the machining tool and/or the machining tool may then *(e.g.* directly and automatically) be programmed by reading the file, upon which the production process comprises the producing/manufacturing step where the machine performs the machining of the product according to the production file, e.g. by directly and automatically executing the production file. The machining process comprises the machining tool cutting a real-world block of material to reproduce the geometry and/or distribution of material captured by the CAD model, *e.g.* up to a tolerance error *(e.g.* tens of microns for milling).

The product/part may alternatively be a molded part, *i.e.* a part manufactured by molding *(e.g.* injection-molding). In such a case, the production process may comprise the step of determining the CAM file. This step may be carried out automatically, by any suitable CAM solution to automatically obtain a CAM file from a CAD model of a molded part. The determining of the CAM file may comprise *(e.g.* automatically) performing a sequence of molding checks based on the CAD model to check that the geometry and/or distribution of material captured by the CAD model is adapted for molding, and *(e.g.* automatically) performing the appropriate corrections if the CAD model is not adapted for molding. Performing the checks and the appropriate corrections (if any) may be carried out automatically, or, alternatively, by a user *(e.g.* a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises *(e.g.* automatically) performing the molding based on the outputted file, where the mold shapes, for the determined hardening time, a liquid material into a shape that corresponds to the geometry and/or distribution of material captured by the CAD model, *e.g.* up to a tolerance error *(e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (e.g. automatically) determining a CAM file based on the CAD model. The CAD model represents the stamping part, *e.g.* possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (e.g. automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, *e.g.* as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, *e.g.* directly and automatically, the CAM file, and perform the stamping process (*e.g.* automatically) based on the file. The stamping process may comprise stamping (*e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length, and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

For instance, a user/designer may be involved in performing the obtaining of the first instance of CAD model. In such cases, the user/designer the method may automatically proposes the first instance by importing an instance of a CAD model, e.g., from a database or from a last session and optionally based on the obtained mesh as discussed above. The user/designer may then modify or replace such an automatic proposition of the method according to her/his knowledge and based on potential applications of the manufacturing product.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

By "database", it is meant any collection of data (i.e. information) organized for search and retrieval (e.g. a relational database, e.g. based on a predetermined structured language, e.g. SQL). When stored on a memory, the database allows a rapid search and retrieval by a computer. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. Users may retrieve data primarily through queries. Using keywords and sorting commands, users can rapidly search, rearrange, group, and select the field in many records to retrieve or create reports on particular aggregates of data according to the rules of the database management system being used.

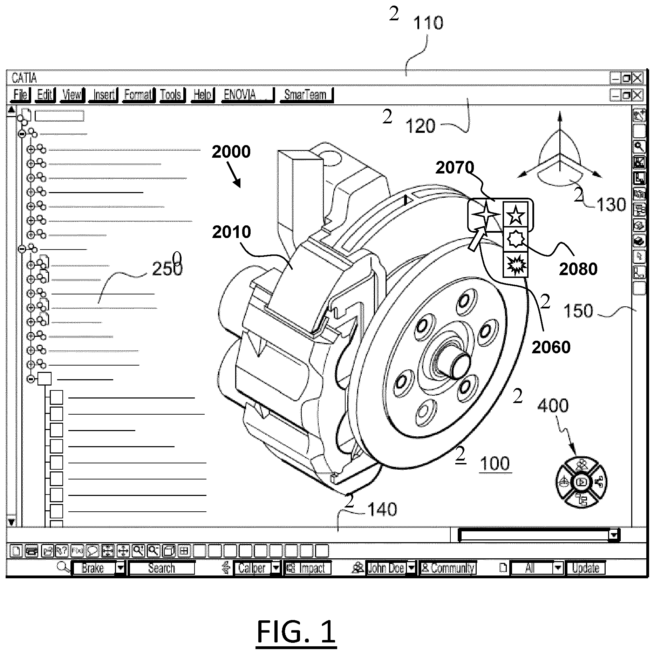

FIG. 1 shows an example of the GUI of the system, wherein the system is a CAD system. The 3D modeled object 2000 may an example of the obtained first instance of a CAD model, an example of the obtained mesh, or an example of the determined second instance of a CAD model according to the method.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching, or the folding of the 3D modeled object displayed on the screen. The GUI may for example display data 2500 related to the displayed product 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

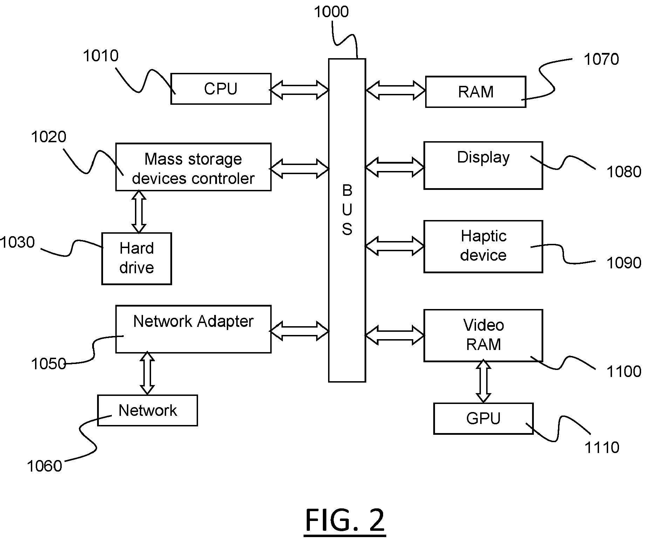

FIG. 2 shows an example of the system, wherein the system is a client computer system, e.g. a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard, or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

Implementations of the method are now discussed.

The implementations are related to product design, mechanical engineering, structure optimization, and shape morphing. More specifically, the implementations aim at automatically deforming/adjusting a CAD model in order to fit an arbitrary target shape represented by a polygonal mesh. Designers and engineers often retrieve polygonal meshes (e.g., downloaded online from the many 3D mesh sharing websites or resulting from a topology optimization method) and then have to create and adapt a parameterized CAD model to fit this shape. The implementations present an efficient, generic, and automatic approach to optimize a CAD model in order to fit/reproduce a provided polygonal mesh. This means that a template/parameterized CAD model can automatically be instantiated/morphed to replicate a shape or follow a given mating surface, while preserving its clean and exact CAD construction.

The implementations formulate such a morphing or deforming/adjusting as a gradient-based optimization to achieve real-time performance. The implementations also aim to perform this operation in a way that preserves the original CAD construction logic. This is particularly relevant for industrial applications which always require CAD representations. For this reason, the implementations provide an improved solution compared to morphing between two polygonal meshes which may produce meaningless results.

As discussed, the implementations may particularly be related to two types of well-known shape representation: parametric CAD models and polygon meshes.

FIG.s 3-4 present different examples of parametric CAD models. As known, such models are the de-facto standard modeling technique for industrial applications. The models represent a 2D or 3D shape by a sequence (or Directed Acyclic Graph) of unambiguous operations (primitives, sketches, extrusions, pockets, fillets, loft surfaces, NURBs, Boolean operations, etc.) often with many geometrical constraints (orthogonality, alignment, continuity, tangency, etc.). Parametric CAD models are an "exact" representation of the object because they have a theoretically infinite resolution. These models have the benefit of being easily editable by a designer or engineer by depending on a small number of high-level (i.e., manually editable, human interpretable) parameters.

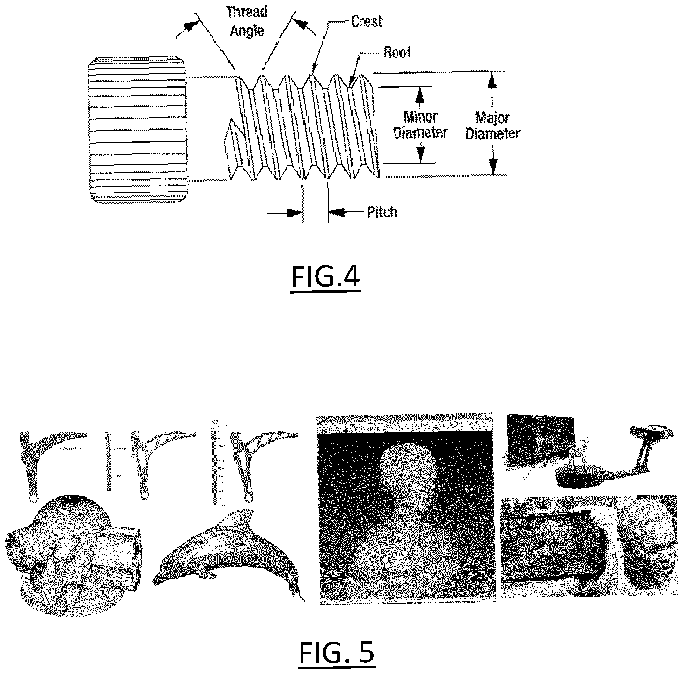

FIG. 5 presents different examples of parametric different polygon meshes. Polygon meshes are a discretization of the surface of an object into a collection of flat polygonal faces (often triangles) sharing edges and vertices. These meshes may originate from many different sources: surface tessellation of CAD model, scan of a real-world object, digital sculpting, or iso-surface extraction from a volumetric representation. Polygon meshes are defined by a large number of low-level (algorithmically editable, machine interpretable) parameters being the vertex positions.

One key distinction between the CAD models and polygon meshes is that any shape (including a CAD model) can be converted into a polygonal mesh easily and fully automatically. In contrast, converting a polygon mesh into a clean and simple CAD model is an extremely challenging open problem. This is because CAD models contain high-level information about the purpose and construction logic of a design whereas a polygonal mesh is merely a discretization/sampling of the surface of that design. In this sense, the distinction between CAD and polygonal 3D models is analogous to the distinction between vector graphics and pixel grids for 2D images.

As known, a CAD model cannot directly be compared with a polygon mesh because these two representations are fundamentally different. Hence, thee implementations of the method propose a workflow where both the target polygon mesh and the CAD model are first transformed into a common scalar field representation, and then compared through some chosen similarity metric. Moreover, these transformations and similarity metric are differentiable which allow computing the total derivatives with respect to the CAD parameters. These total derivatives are stable and accurate and enable the use of gradient-based schemes to drive the CAD model optimization.

Such implementations enable the morphing and optimization of complex 2D or 3D CAD model with many more parameters than previously possible. The optimization is also much more efficient, requiring fewer iterations and exhibiting a smooth convergence. Furthermore, the implementations preserve the parameterization, construction logic and feature tree of the input CAD model, thus guaranteeing that the optimized model satisfies the original length scale, geometry, manufacturing, or assembly constraints imposed by the designer.

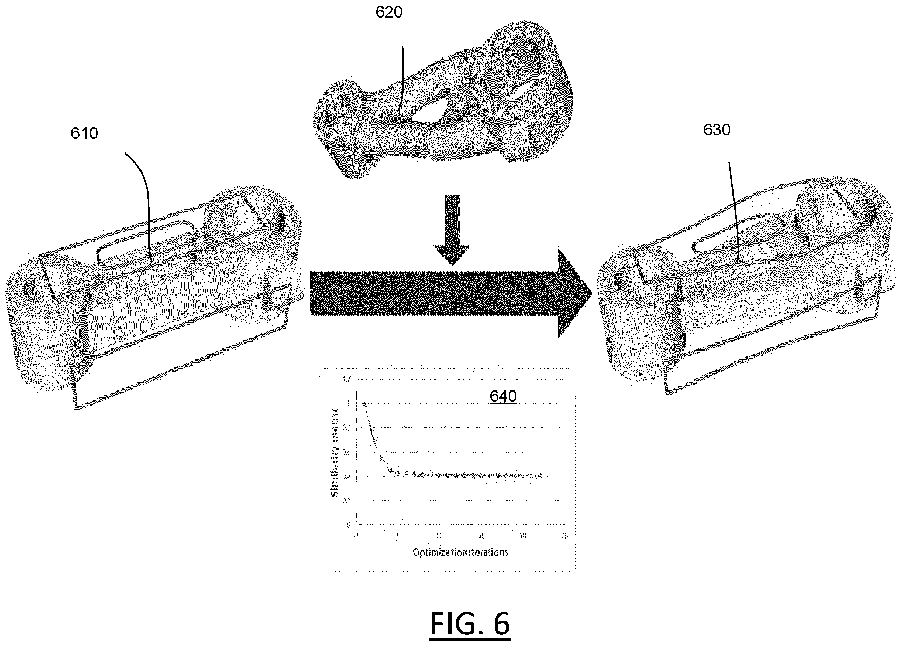

FIG. 6 presents a graphical representation of the implementations. In this example, the method is provided with an initial CAD model 610 and a target triangulated shape 620. The implementation then perform an optimization to obtain the optimized CAD model 630. The convergence of the optimization is shown according to a similarity metric versus the number of iterations as 640.

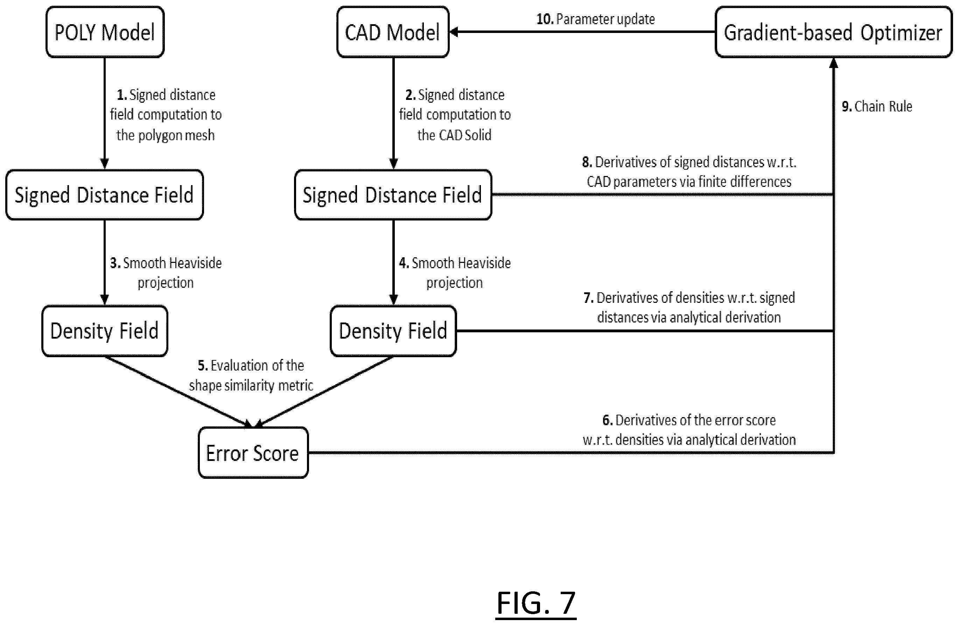

The implementations are now further discussed in reference to FIG. 7, step-by-step.

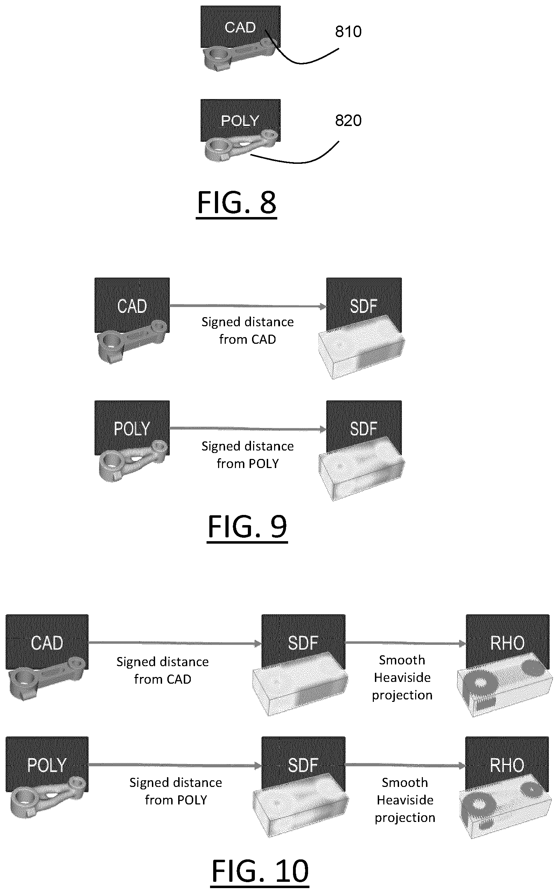

FIG. 8 presents the input according to such example implementations. The input consists of two models: the parameterized CAD model 810 (i.e., a first instance of the CAD model) which is supposed to optimized, and the polygonal model POLY 820 that represents a target shape to match. Optionally, the user can define a subset of the CAD parameters allowed to be optimized. The models 810 and 820 presents a connecting rod.

In the example implementation, the initial CAD model can be quickly made by a designer and is, by construction, manufacturable through industrial machining processes thanks to constraints imposed in the CAD parameterization. In contrast, the polygonal model (POLY) is a more complicated and organic shape with curved surfaces. The polygonal model is more efficient in terms of mass and physical performance, but is considerably more expensive and challenging to manufacture via machining. The implementation automatically modifies the CAD model to reproduce the target shape according to POLY model with its advantageous performance, while guaranteeing to preserve the manufacturability of the CAD model.

FIG. 9 presents steps 1 and 2 of the flowchart presented in FIG. 7, i.e., computing a signed distance field to the polygonal mesh and computing a signed distance field to the CAD solid.

In Steps 1 and 2, the implementations discretize the spatial region encompassing the CAD model and polygonal models into two instances of a mesh of volumetric elements. The volumetric elements may be any of tetrahedral, hexahedral, or regular cubes. For each element, the implementations evaluate a distance of the element to the surface of the CAD model or the polygonal model, for step 1 and 2 respectively. This distance value is signed, indicating if the element is inside or outside the solid object described by the model. By convention, a negative distance indicates an element inside the (polygonal/CAD) model and a positive distance indicates an element outside the (polygonal/model) model.

The implementations designate the two Signed Distance Fields (SDF) as functions of the CAD and polygonal models as follows:

$$SDF_i(CAD) \quad \forall i \in \omega, \qquad SDF_i(POLY), \ \forall i \in \omega,$$

where $\omega$ is the set of elements for the given discretization.

The implementations may use regular grid discretization which allows the most efficient computations of the signed distance field. The SDF are calculated as known in the art (https://en.wikipedia.org/wiki/Signed distance function).

FIG. 10 presents steps 3 and 4 of the flowchart presented in FIG. 7. In these steps two signed distance fields are transformed into two density fields (RHO) having values $0 \leq p \leq 1$ using a smooth Heaviside projection. The density fields are calculated as follows:

$$\rho_i\big(SDF_i(CAD)\big) = \frac{1}{1 + e^{\frac{SDF_i(CAD)}{0.2\alpha l}}} \qquad \forall i \in \omega$$

$$\rho_i\big(SDF_i(POLY)\big) = \frac{1}{1 + e^{\frac{SDF_i(POLY)}{0.2\alpha l}}} \qquad \forall i \in \omega$$

where $\alpha \geq 0$ is the steepness coefficient of the smooth Heaviside projection and *l* is the average size of the elements in the discretization. The implementations may set $\alpha$ = 1.0 by default.

The implementations may use any other function approximating the Heaviside function with the appropriate output range and well-defined first order derivatives. Examples of such approximation can be found in https://en.wikipedia.org/wiki/Heaviside step function.

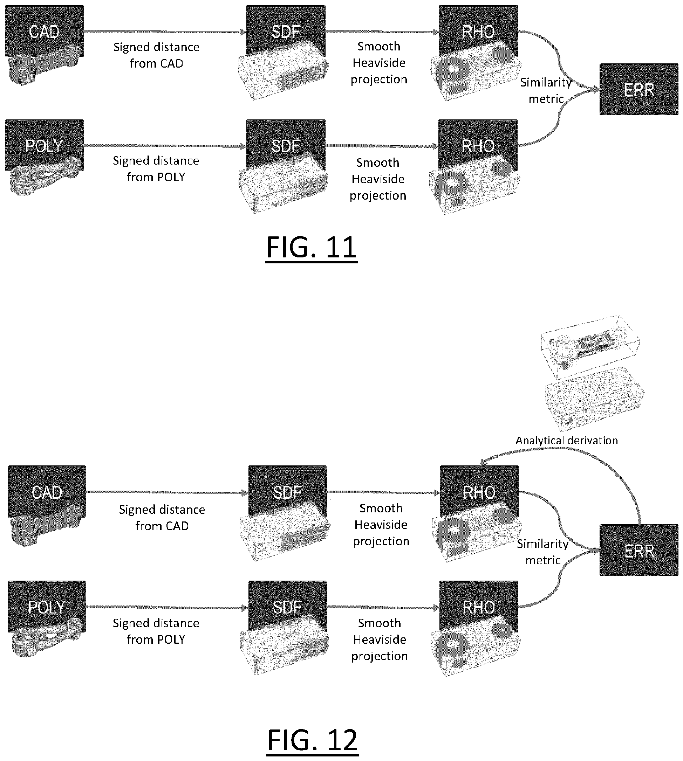

FIG. 11 presents step 5 of the flowchart presented in FIG. 7. Once both models are represented by a density field on the same mesh discretization, they can be compared using various similarity metrics. For a chosen metric, this allows computing an error score. The simplest metric is the sum of squared differences between the two fields as follows:

$$ERR(CAD, POLY) = \sum_{i \in \omega} \Big(\rho_i\big(SDF(CAD)\big) - \rho_i\big(SDF(POLY)\big)\Big)^2$$

Another option is to use a smooth approximation of the max or min operators instead of a sum (https://en.wikipedia.org/wiki/Smooth maximum). Once the error score is evaluated, it needs to be differentiated with respect to the CAD parameterization in order to be used in efficient gradient-based optimization schemes.

FIG. 12 presents step 6 of the flowchart presented in FIG. 7. Because the similarity metric is chosen to be differentiable, the implementations are able to formulate its analytical derivative with respect to the density. In the case of the sum of squared differences, the derivative is as follows:

$$\frac{\delta ERR}{\delta \rho_i} = 2 \Big(\rho_i\big(SDF(CAD)\big) - \rho_i\big(SDF(POLY)\big)\Big) \qquad \forall i \in \omega.$$

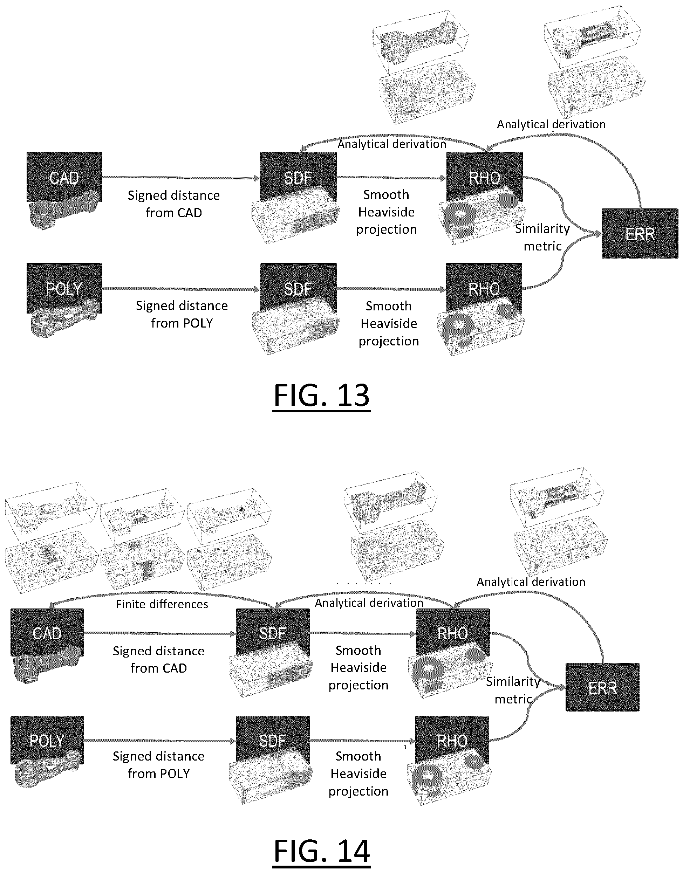

FIG. 13 presents step 7 of the flowchart presented in FIG. 7. In this step and similar to step 6, as the density projection is differentiable with respect to the signed distance field, the implementations compute its analytical derivative as follows:

$$\frac{\delta \rho_i}{\delta SDF_i} = -\frac{e^{\frac{SDF_i}{0.2\alpha l}}}{(0.2\alpha l) \times \left(1 + e^{\frac{SDF_i}{0.2\alpha l}}\right)^2} \qquad \forall i \in \omega.$$

FIG. 14 presents step 8 of the flowchart presented in FIG. 7. In this step, finally, the derivative of the signed distance field with respect to the CAD parameterization is approximated using finite differences. This is achieved by sequentially applying a small perturbation *hm* to each CAD parameter and observing the impact on the SDF values as follows:

$$\frac{\delta SDF_i}{\delta CAD_n} \cong \frac{SDF_i(CAD_n + h_n) - SDF_i(CAD_n - h_n)}{2h_n}, \forall i \in \omega, \forall n \in \Omega_{param}$$

where $\Omega_{param}$ is the set of CAD parameters to optimize.

The separating of the density projection from the SDF allows using a separate differentiation strategy. This is advantageous because finite difference schemes can be less reliable for highly non-linear functions such as this density projection step. On the other hand, analytical derivation is perfectly tractable for this choice of smooth Heaviside projection and yields the exact solution for negligible computational cost. By definition, the signed distance changes linearly as one moves away from the closest point to the surface of the CAD model. Therefore, a finite differences scheme proves very reliable at capturing the first order derivatives of the SDF. Note that the present formulation uses a centered finite difference scheme, but other finite difference schemes would also be applicable. Additionally, the present finite difference is strictly a geometrical process, hence the computational costs is low.

In step 9, the derivatives computed in steps 6, 7 and 8 are combined using the chain rule to obtain the derivatives of the error score with respect to the CAD parameters as follows:

$$\frac{\delta ERR}{\delta CAD_n} = \sum_{i \in \omega} \frac{\delta ERR}{\delta \rho_i} \frac{\delta \rho_i}{\delta SDF_i} \frac{\delta SDF_i}{\delta CAD_n}, \forall n \in \Omega_{param}.$$

In step 10, the CAD parameters are updated according to the derivatives calculated in the previous steps using a gradient descent optimization scheme as known in the art (https://en.wikipedia.org/wiki/Gradient descent). The process is repeated until a predefined number of iteration or convergence criteria is met.

Table 1 below shows a summary of the notation used in above discussion of the implementations:

*Table 1*

| CAD | Parametrized CAD representation to be optimized |
|---|---|
| POLY | Target shape represented as a polyhedral surface (triangle mesh) |
| SDF | Signed Distance Field representation |
| ERR | Error metric measuring the similarity between the CAD and target shape |
| $n \in \Omega_{param}.$ | Set of high-level optimization variables |
| $i \in \omega$ | Set of low-level optimization variables |
| $h$ | Perturbation size as a fraction of the allowed range |
| $\beta$ | Smoothness coefficient for the soft-max or soft-min formulations |

FIG.s 15A-B present a summary of full mathematical formulation.

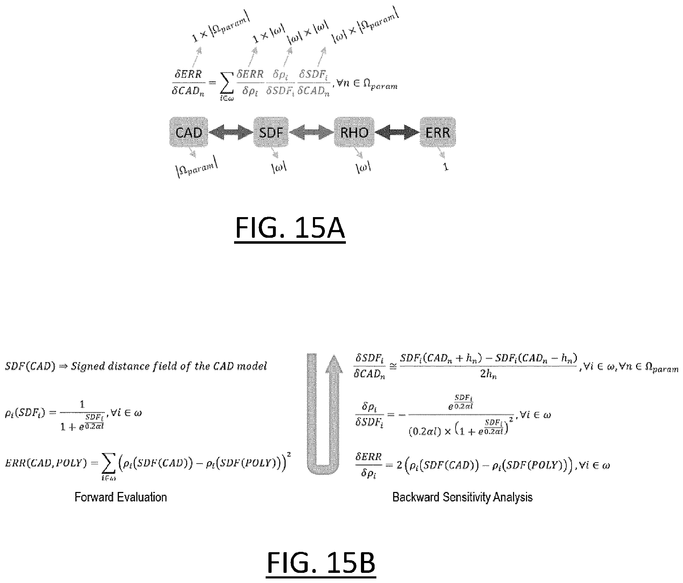

FIG. 15A shows a dimensionality for each of the terms in the derivatives of the error score with respect to the CAD. In other words:

- the derivative $\frac{\delta ERR}{\delta CAD_n}$ is of the size of $1 \times |\Omega_{param}|$;

- the derivative $\frac{\delta ERR}{\delta \rho_i}$ is of the size of $1 \times |\omega|$;

- the derivative $\frac{\delta \rho_i}{\delta SDF_i}$ is of the size of $|\omega| \times |\omega|$; and

- the derivative $\frac{\delta SDF_i}{\delta CAD_n}$ is of the size of $|\omega| \times |\Omega_{param}|$;

where $|\Omega_{param}|$ is the size of the set of high-level optimization variables and $|\omega|$ is the size of the set of low-level optimization variables. As also presented in FIG. 15A, (each instance of) the CAD model has a dimensionality of size $|\Omega_{param}|$, the SDF has a dimensionality of size $|\omega|$, the density field RHO has a dimensionality of size $|\omega|$, and the error metric ERR CAD model has a dimensionality of size 1.

FIG. 15B shows a mathematical relationship between steps of the implementations as discussed above. The left column presents the forward evaluation of the error metric at each iteration, while the left column are the steps of the backward sensitivity analysis.

Two examples of the implementations are now discussed.

### 3D connecting rod results

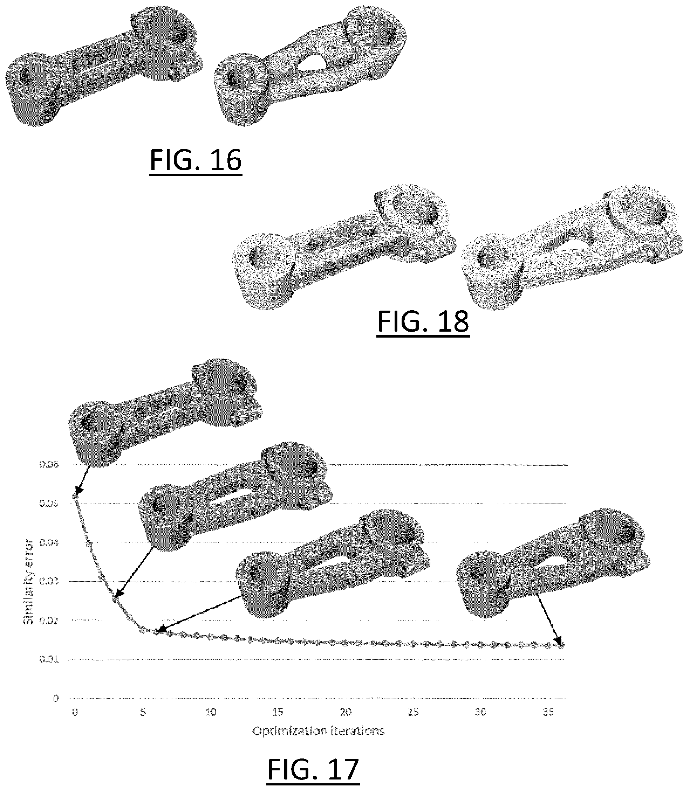

In a first example, the implementation optimizes the CAD model of FIG. 16, left given the target polygon mesh of FIG. 16, right. Note that the CAD model has realistic attach points composed of two components assembled with bolts. In contrast, the target shape has a more complex linkage geometry with curved surfaces but lacks assembly capability. The implementation allows the designer to optimize CAD parameters in order to fit the target shape. In the present case, the 18 parameters to be optimized are the inner hole radii and positions as well as the contour curves of the linkage.

FIG. 17 presents the optimization process. The optimization runs in seconds on a laptop and converges smoothly even with many non-linear and heterogeneous CAD parameters This efficiency is enabled by the invention's use of derivatives on an intermediate field representation to rigorously capture the complex interplay between all CAD parameters. The resulting optimized model is a valid CAD representation and satisfies the same constraints as the initial CAD model. In the present case study, the constraints in the CAD parameterization are responsible for guaranteeing the manufacturability and assembly of the Connecting Rod model. The internal field representation and derivatives produced by the invention can provide insight into the optimization process and its outcome.

FIG. 18 presents a comparison between the initial CAD model and the optimal CAD model, colored based on its match with the target shape (i.e. the error score derivative). Lighter regions correspond to a perfect match between the CAD model and target shape while darker colors represent regions where the CAD model respectively overshoots or undershoots the target shape.

### 2D shape imprint results

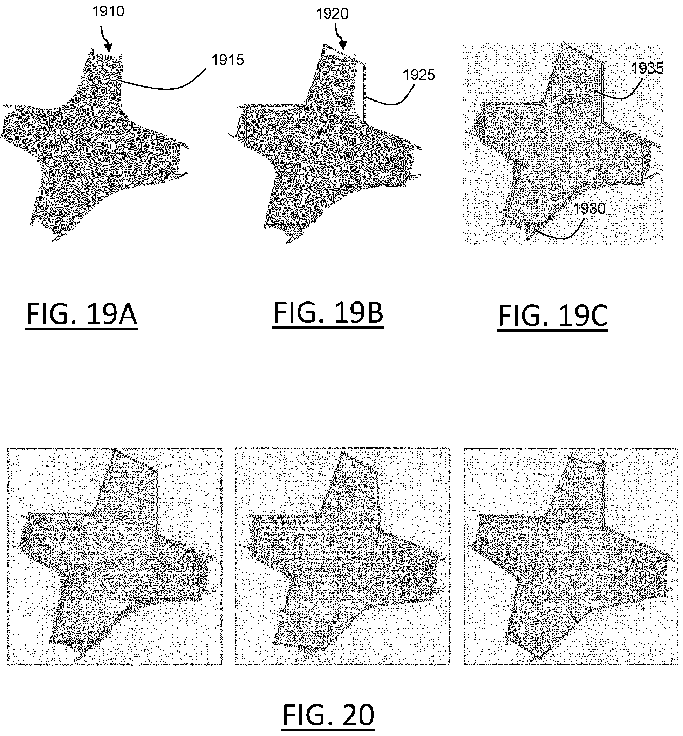

This next use case is a reconstruction problem on a 2D scanned imprint of a geometry. The goal is to provide a simple CAD sketch and automatically adapt it to the scanned target shape. FIG. 19A shows the target shape 1910 defined as the interior region of the target contour 1915. This target shape 1910 is an initial arbitrary shape, for example obtained from an STL file from a CATIA use case. A designer seeks to obtain a CAD model which approximate the target shape 1910 as closely as possible. FIG. 19B shows an initial sketch 1920 of such a CAD model, i.e., a first instance of the CAD model. The initial sketch 1920 is constituted of 12 nodes forming a polyline 1925. Such an initial polyline sketch as 1920 may be manually created by the user by clicking said 12 points close to the target contour 1915. FIG. 19C presents a graphical representation of the similarity metric evaluated on the target shape 1910. Said graphical representation shows a partial derivative of the similarity function between the target shape 1910 and the polyline sketch 1920. The dark grey regions 1930 shows negative derivative, i.e., the regions without enough material for the CAD model, while the light grey regions 1935 shows positive derivative, i.e., the regions with too much material for the CAD model. As it can be seen in FIG. 19, the regions 1930 and 1935 match well the shape difference between 1910 and 1920, so the implementation tends to determine a second instance of the CAD model extending towards the target shape model in the regions 1930 and shrinking towards the target shape model in the regions 1935.

The three following examples in FIG.s 20, 21 and 22 show how different CAD parameterizations are optimized by the proposed approach. Each parameterization is visualized at iteration 0, 5 and 20.

The first parameterization (FIG. 20) simply uses the initial polyline to produce a design made of 12-line segments. This yields 24 CAD sketch parameters corresponding to the planar positions of 12 sketch nodes.

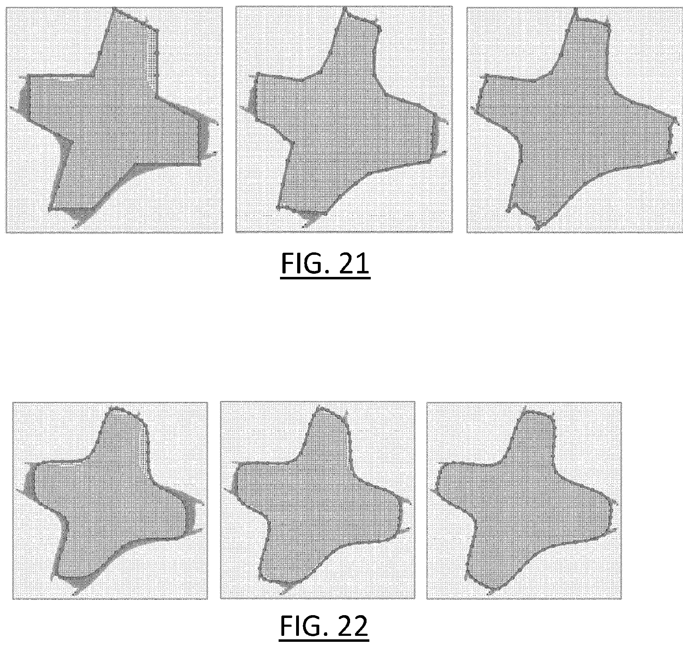

The second parameterization (FIG. 21) uses automatic sub-sampling of the initial polyline to add control nodes on the contour. This yields 96 CAD sketch parameters corresponding to the planar positions of 48 sketch nodes.

The third parameterization (FIG. 22) uses a smooth spline contour yielding 24 CAD sketch parameters corresponding to the planar positions of 12 control points defining the spline curve.

### Claims

1. A computer-implemented method for designing a manufacturing product having one or more mechanical functionalities, the method comprising:

   - obtaining:

∘ a first instance of a CAD model, the CAD model including a feature tree having a plurality of continuous CAD parameters, the CAD model further including a set of one or more parameterization constraints which specifies the one or more mechanical functionalities, the first instance including a first value for each continuous CAD parameter, and

∘ a mesh (POLY) representing a target boundary shape of the manufacturing product; and

- determining a second instance of the CAD model from the first instance of the CAD model, the second instance including a second value for each continuous CAD parameter, the determining of the second instance consisting of computing the second values by modifying at least part of the first values, so as to minimize a shape dissimilarity metric (ERR) between a boundary shape represented by the first instance of the CAD model and the target boundary shape.

2. The method of claim 1, wherein the shape dissimilarity metric is a discrepancy measure between a first scalar field and a second scalar field, the first scalar field being defined based on the CAD model and the second scalar field being defined based on the mesh.

3. The method of claim 2, wherein:

- the first scalar field is defined on a first shape englobing the first instance of the CAD model, and
- the second scalar field is defined on a second shape englobing the target boundary shape;

wherein optionally, each of the first shape and the second shape is a respective bounding box.

4. The method of any of claims 2 to 3, wherein

- the first scalar field is the application of a first function ($\rho$) on a respective signed distance field (SDF) to the first instance of the CAD model, and
- the second scalar field is the application of a second function ($\rho$) on a respective signed distance field (SDF) to the mesh;

wherein optionally, the first function and the second function are identical.

5. The method of claim 4, wherein each of the first scalar field and the second scalar field is a density field, wherein optionally at least one of the first function and the second function is a smooth Heaviside function or an approximation of a smooth Heaviside function.

6. The method of any of claims 2 to 5, wherein the discrepancy measure between a first scalar field and a second scalar field is a measure of squared differences ($(\rho_i(SDF(CAD)) - \rho_i(SDF(POLY)))^2$) between the first scalar field ($\rho_i(SDF(CAD))$) and the second scalar field ($SDF(POLY)$);
wherein, optionally, the measure of squared difference comprises:

- a sum of squared differences,
- a smooth minimum of squared differences, or
- a smooth maximum of squared differences.

7. The method of any of claims 1 to 6, wherein the minimization uses a gradient-based optimization method, the optimization method having as free variables the plurality of continuous CAD parameters, the shape dissimilarity metric being a differentiable function with respect to the free variables.

8. The method of claim 7, wherein the optimization method uses sensitivities, each sensitivity being an approximation ($\frac{\delta ERR}{\delta CAD_n}$) of a respective derivative of a respective shape dissimilarity metric (ERR) with respect to a respective CAD parameter of the plurality of continuous CAD parameters.

9. The method of claim 8, wherein the sensitivities are compositions of:

- respective derivatives of the shape dissimilarity metric with respect to the signed distance field, and
- respective derivatives of the signed distance field with respect to a respective CAD parameter ($CAD_n$) of the plurality of continuous CAD parameters.

10. The method of claim 9, wherein each of the respective derivatives of the shape dissimilarity metric with respect to the signed distance field comprises an analytical derivative.

11. The method of any of claims 9 or 10, wherein each of the respective derivatives of the signed distance field with respect to a respective CAD parameter comprises an approximative derivative; the approximative derivative optionally comprising a finite difference.

12. The method according to any of claims 1 to 11, wherein the CAD model further includes manufacturing specifications each associated to a respective portion of the feature tree, the first instance and the second instance both being configured for being inputted to a manufacturing tool and be manufactured according to the manufacturing specifications.

13. A computer program comprising instructions for performing the method according to any one of claims 1 to 12.

14. A computer readable storage medium having recorded thereon the computer program of claim 13.

15. A system comprising a processor coupled to a memory, the memory having recorded thereon the computer program of claim 13.

FIG. 1

FIG. 2

R35.00
R80.00
R80.00
Ø 45.00
120.00
30.00
90.00

R3.00
ALL BLUE FILLETS

60.00
20.00

(167.81)
Ø 90.00
20.00

| SIZE | DWG. NO. | | REV |
|------|----------|---|-----|
| A | DR1-PH1 | | |
| SCALE: 1:5 | WEIGHT: | | SHEET 1 OF 2 |

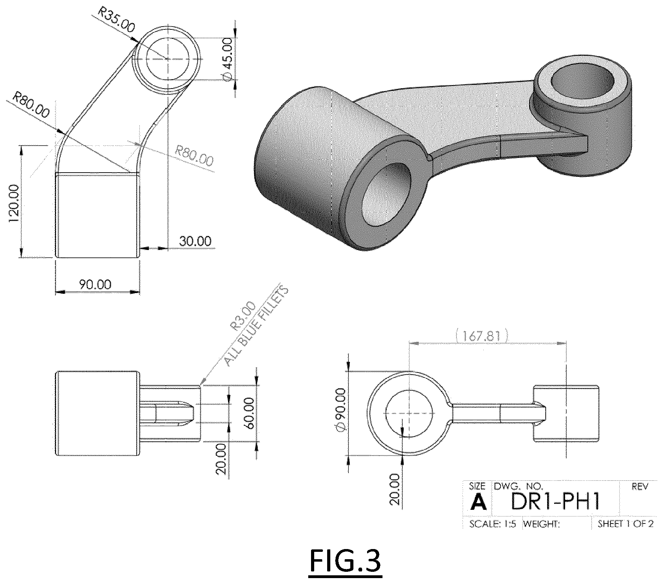

FIG.3

## FIG.4

## FIG. 5

FIG. 6

FIG. 7

EP 4 471 649 A1

810

820

## FIG. 8

Signed distance from CAD

Signed distance from POLY

## FIG. 9

Signed distance from CAD

Smooth Heaviside projection

Signed distance from POLY

Smooth Heaviside projection

## FIG. 10

FIG. 11

FIG. 12

FIG. 13

FIG. 14

$$\underbrace{\frac{\delta ERR}{\delta CAD_n}}_{1 \times |\Omega_{param}|} = \sum_{i \in \omega} \underbrace{\frac{\delta ERR}{\delta \rho_i}}_{1 \times |\omega|} \underbrace{\frac{\delta \rho_i}{\delta SDF_i}}_{|\omega| \times |\omega|} \underbrace{\frac{\delta SDF_i}{\delta CAD_n}}_{|\omega| \times |\Omega_{param}|}, \forall n \in \Omega_{param}$$

$$\underset{|\Omega_{param}|}{\boxed{CAD}} \Longleftrightarrow \underset{|\omega|}{\boxed{SDF}} \Longleftrightarrow \underset{|\omega|}{\boxed{RHO}} \Longleftrightarrow \underset{1}{\boxed{ERR}}$$

## FIG. 15A

$SDF(CAD) \Rightarrow$ *Signed distance field of the CAD model*

$$\rho_i(SDF_i) = \frac{1}{1 + e^{\frac{SDF_i}{0.2\alpha l}}}, \forall i \in \omega$$

$$ERR(CAD, POLY) = \sum_{i \in \omega} \left( \rho_i\big(SDF(CAD)\big) - \rho_i\big(SDF(POLY)\big) \right)^2$$

Forward Evaluation

$$\frac{\delta SDF_i}{\delta CAD_n} \cong \frac{SDF_i(CAD_n + h_n) - SDF_i(CAD_n - h_n)}{2h_n}, \forall i \in \omega, \forall n \in \Omega_{param}$$

$$\frac{\delta \rho_i}{\delta SDF_i} = -\frac{e^{\frac{SDF_i}{0.2\alpha l}}}{(0.2\alpha l) \times \left(1 + e^{\frac{SDF_i}{0.2\alpha l}}\right)^2}, \forall i \in \omega$$

$$\frac{\delta ERR}{\delta \rho_i} = 2\left( \rho_i\big(SDF(CAD)\big) - \rho_i\big(SDF(POLY)\big) \right), \forall i \in \omega$$

Backward Sensitivity Analysis

## FIG. 15B

FIG. 16

FIG. 18

FIG. 17

FIG. 19A

FIG. 19B

FIG. 19C

FIG. 20

FIG. 21

FIG. 22

| | Europäisches Patentamt / European Patent Office / Office européen des brevets | **EUROPEAN SEARCH REPORT** | Application Number EP 23 30 5870 |
| | | | |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/087032 A1 (UNIV DEGLI STUDI DI FIRENZE [IT]) 9 May 2019 (2019-05-09) * the whole document * * claims 1,3,6,12 * * figure 5 * * figures 1,4 * * page 5, line 11 * * page 11, lines 17 to 24 *<br>----- | 1-15 | INV. G06F30/17<br><br>ADD. G06F111/04 G06F119/18 |
| X | Teaching Tech: "Tool holder using Onshape sketches and extrusion – 3D design for 3D printing pt2", , 29 July 2022 (2022-07-29), XP093101475, Retrieved from the Internet: URL:https://www.youtube.com/watch?v=VvpQu2rsH3A * the whole document * * 13:40 * * 9:40 * * 4:47 to 4:55 *<br>----- | 1-15 | |
| X | Teaching Tech: "Selecting a free 3D CAD option – 3D design for 3D printing pt1", , 26 July 2022 (2022-07-26), XP093101498, Retrieved from the Internet: URL:https://www.youtube.com/watch?v=XHzOzxCQ7MU * the whole document * * 6:00 to 6:05 *<br>-----<br>-/-- | 1-15 | TECHNICAL FIELDS SEARCHED (IPC)<br><br>G06F |

The present search report has been drawn up for all claims

| Place of search | Date of completion of the search | Examiner |
|---|---|---|
| Munich | 15 November 2023 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 23 30 5870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Autodesk Fusion: "Webinar: STL File Editing is Finally Easy with Fusion 360's New Parametric Mesh Workspace", , 30 September 2021 (2021-09-30), XP093101856, Retrieved from the Internet: URL:https://www.youtube.com/watch?v=MlbHz1rlppU * the whole document * * 38:43 to 39:05 * ----- | 1-15 | |

**TECHNICAL FIELDS SEARCHED (IPC)**

The present search report has been drawn up for all claims

| Place of search | Date of completion of the search | Examiner |
|---|---|---|
| Munich | 15 November 2023 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 23 30 5870

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2023

| Patent document cited in search report | Publication date | Patent family member(s) | Publication date |
|---|---|---|---|
| WO 2019087032 A1 | 09-05-2019 | NONE | |

For more details about this annex : see Official Journal of the European Patent Office, No. 12/82

**EP 4 471 649 A1**

**Patent documents cited in the description**

- EP 3327593 A
- EP 21306754, Dassault Systèmes